(19) Europäisches Patentamt / European Patent Office / Office européen des brevets

(11) **EP 3 816 901 A1**

(12) **EUROPEAN PATENT APPLICATION**
published in accordance with Art. 153(4) EPC

(43) Date of publication:
**05.05.2021 Bulletin 2021/18**

(51) Int Cl.:
*G06Q 10/10* (2012.01)     *G06Q 10/06* (2012.01)

(21) Application number: **19825949.1**

(86) International application number:
**PCT/JP2019/023802**

(22) Date of filing: **17.06.2019**

(87) International publication number:
**WO 2020/004094 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.06.2018 JP 2018120658**

(71) Applicant: **Shimura, Akiyoshi**
**Tokyo 158-0083 (JP)**

(72) Inventor: **Shimura, Akiyoshi**
**Tokyo 158-0083 (JP)**

(74) Representative: **Grünecker Patent- und**
**Rechtsanwälte**
**PartG mbB**
**Leopoldstraße 4**
**80802 München (DE)**

(54) **PERSONNEL MANAGEMENT ASSISTANCE SYSTEM**

(57) [Problems to Be Solved]

Focus on the fact that the resignation/leave-of-absence and productivity decline risks of individuals vary depending on their lifestyle habits and sleeping conditions, and perform regression analysis based on a statistically superior number of substantiated results regarding the foregoing to obtain coefficients of regression for the respective question items and then compute the resignation/leave-of-absence and productivity decline risks of individuals as probabilities, so that the outcomes will be effectively utilized in the handling of personnel matters and hiring of new recruits by organizations.

[Means for Solving the Problems]

Provide a personnel management assistance system that, based on response results to question items from individuals belonging to an organization or prospective new recruits, as well as on the coefficients of regression assigned to the respective question items, computes their resignation/leave-of-absence probabilities and/or productivity decline risks as numerical values.

[FIG. 1]

EP 3 816 901 A1

**Description**

**Technical Field**

The present invention relates to a system for computing the resignation/leave-of-absence risks or productivity decline risks of employees, or resignation/leave-of-absence risks of prospective new recruits, to a company or other organization, based on probability calculations, to support the organization in implementing smooth personnel management.

**Background Art**

The problem of sudden resignations or leaves of absence of human resources who were hired at the cost of a large investment, is one of material personnel and hiring-related risks to a company, etc. Decline in employee productivity caused by some kind of psychological or physical instabilities (presenteeism) also presents a significant problem for any organization.

To prevent these resignations and leaves of absence, organizations are conducting aptitude tests to prevent skills mismatches, etc., and thorough hiring interviews, while also implementing mental health measures, etc.

The personnel management assistance systems proposed to date are limited to ones that seek optimal groupings of employees according to their personality, compatibility, etc. (refer to Patent Literature 1), and others that identify and provide efficient support for employees who need health care by understanding the actual state of their mental health instabilities (refer to Patent Literature 2).

On the other hand, it is clear from the latest studies conducted by the inventors of the present invention that resignations/leaves of absence of employees and decline in their productivity are primarily caused by the lifestyle habits and sleep problems of the employees at individual level. For example, even when their skills match, remuneration, work environment, etc., are at the same level, different lifestyle habits of employees and whether or not they have sleep problems lead to significantly different resignation/leave-of-absence probabilities and declines in productivity.

For example, when a person keeps regular schedules every day by waking up fresh in the morning, eating nutritious meals after coming home, doing moderate exercise, going to bed early at night and sleeping enough hours to prepare for work the next day, while another person keeps quite irregular hours daily by waking up late and hurrying to work, eating a lot of fast food and snacks after coming home, drinking heavily and playing computer games until midnight, and starting the next day with very little sleep, the probabilities of the two persons resigning/taking a leave of absence or risks of their productivity declining are clearly different; specifically, the latter person has an overwhelmingly higher probability to resign/take a leave of absence and his/her productivity is also bound to decline.

**Background Art Literature**

**Patent Literature**

Patent Literature 1: Japanese Patent Laid-open No. 2009-271601
Patent Literature 2: Japanese Patent Laid-open No. 2016-151979

**Summary of the Invention**

**Problems to Be Solved by the Invention**

As described above, the conventional personnel management assistance systems only seek optimal groupings of employees according to their personality, compatibility, etc., or understand the actual state of their mental instabilities, and are not based on the lifestyle habits and sleep states of individuals; consequently, they are unable to fully prevent the resignation/leave-of-absence risks and productivity decline risks beforehand.

The present invention focuses on the fact that the resignation/leave-of-absence and productivity decline risks of individuals vary depending on their lifestyle habits and sleeping conditions, as made clear by the latest studies conducted by the inventors of the present invention, and its object is to perform regression analysis based on a statistically significant number of substantiated results (questionnaire results) regarding the foregoing to obtain coefficients of regression for the respective question items and then compute the resignation/leave-of-absence and productivity decline risks of individuals as probabilities, so that the outcomes will be effectively utilized in the handling of personnel matters and hiring of new recruits by organizations.

**Means for Solving the Problems**

To achieve the aforementioned object, the invention under the present application for patent is a personnel management assistance system that computes at least one of resignation/leave-of-absence probabilities of individuals belonging to an organization and/or prospective new recruits, and productivity decline risks of individuals belonging to the organization, thereby supporting the organization in implementing smooth personnel management, characterized in that:

it comprises an organization terminal used by the organization, and an administration server in which a processing program is recorded and also multiple databases are built;
the organization terminal is connected online to the administration server;
one of the databases records multiple pre-defined question items and raw coefficients of regression corresponding to the question items;
an access is made from the organization terminal to the administration server to make a selection of all of the multiple question items recorded in the one of the databases or selection of arbitrary question items from among all of the question items, as well as to make a decision of whether to compute the resignation/leave-of-absence probability or productivity decline risk, from the administration server;
the processing program, if the selected question items do not include all of the question items, performs a new regression analysis based on the selected question items, computes new coefficients of regression for the selected question items, and records the selected question items and computed new coefficients of regression in another of the databases; and
the processing program computes, as numerical values, the resignation/leave-of-absence probabilities of the individuals belonging to the organization or the prospective new recruits and/or the productivity decline risks of the individuals belonging to the organization, based on the response results from the individuals belonging to the organization or the prospective new recruits as well as the raw coefficients of regression or new coefficients of regression, and records the computation results in the one of the databases, while also transmitting them to the organization terminal as electronic data and/or outputting them to a paper medium.

**Effects of the Invention**

According to the invention under the present application for patent having the aforementioned constitution, the resignation/leave-of-absence and productivity decline risks of individuals can be calculated as probabilities through regression analysis and these results can be presented to the individual respondents and organization to shed light on the items of lifestyle habits that should be improved, for use in the hiring of new recruits, placement of personnel, and lifestyle guidance and health guidance given after hiring/placement.

**Brief Description of the Drawings**

[FIG. 1] An outline view of the system constitution pertaining to the present invention.
[FIG. 2] An explanation drawing of a database in which existing response data as well as resignation/leave-of-absence conditions and productivity decline conditions have been aggregated.
[FIG. 3] An explanation drawing of a database D2 in which coefficients of regression for respective question items are stored.
[FIG. 4] An explanation drawing of processing pertaining to preparation of a questionnaire.
[FIG. 5] An explanation drawing of how a response result is processed.
[FIG. 6] A regression equation.

**Mode for Carrying Out the Invention**

Embodiments of the invention under the present application for patent are explained below by referring to the drawings.
It should be noted that the term "resignation/leave-of-absence probability" in the invention under the present application for patent means a degree of possibility of a human behavior of resigning or taking a leave of absence occurring, as predicted and converted to numerical form, and does not mean a purely mathematical probability.

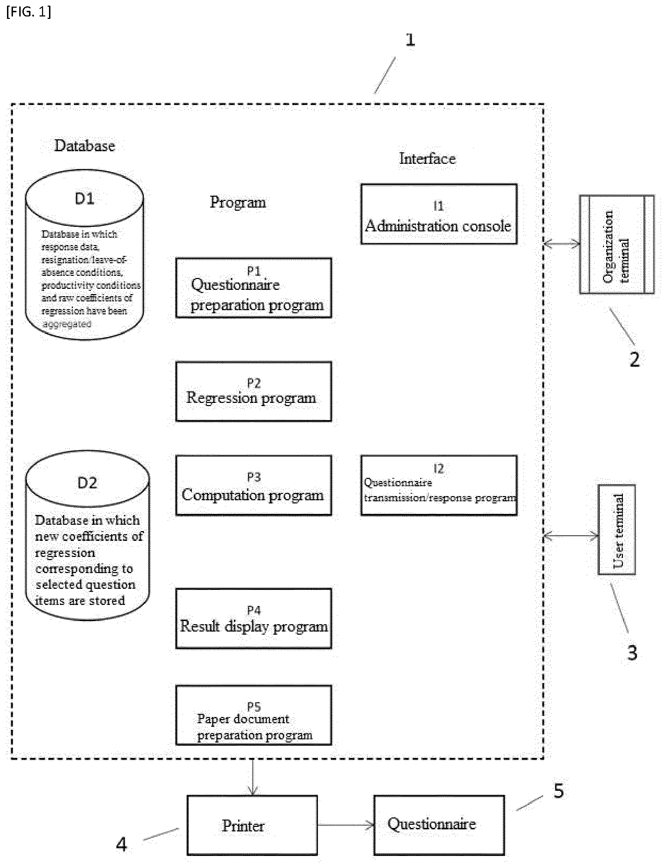

FIG. 1 is an overview of the system constitution pertaining to the invention under the present application for patent, where the system is constituted by an administration server 1, as well as an organization terminal 2, and a user terminal 3, both connected online to the administration server 1. The user terminal 3 is a PC, tablet terminal, smartphone or other information terminal owned by an employee belonging to an organization or prospective new recruit and, in this embodiment, a printer 4 for outputting a questionnaire 5 as a paper medium is also connected.

Built in the administration server 1 are: a database D1 in which a statistically significant number of preliminary study results (all of question items, response result data, resignation/leave-of-absence conditions of individual employees, productivity conditions of individual employees, and coefficients of regression (raw coefficients of regression) corresponding to all of the question items, as explained below) have been aggregated by the starting point of processing; a database D2 in which question items arbitrarily selected by a company (organization) utilizing the system from among all question items, as well as coefficients of regression (new coefficients of regression) assigned to the selected question items, are stored; a questionnaire preparation program P1 for preparing a questionnaire 5; a regression program P2 for performing regression analysis; a computation program P3 for performing probability calculations regarding resignation/leave-of-absence probabilities and/or productivity decline risks according to the response results to the question items; a result display program P4 for displaying the question response results; a paper document preparation program P5 for outputting the questionnaire 5 and results thereon to a paper medium; an administration console I1 for performing data communication with the organization terminal 2; and a questionnaire transmission/response program 12 for transmitting the questionnaire 5 to the user terminal and also receiving responses.

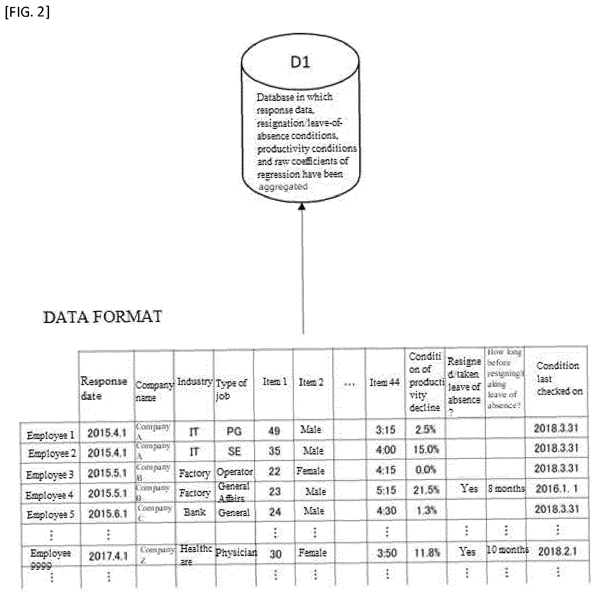

Aggregated in the database D1, as shown in FIG. 2, are the response results to the survey items (question items) put to approx. 3000 persons working in the service industry within Tokyo, by the inventors of the present invention, including 1) age, 2) sex, 3) family structure, 4) living situation, 5) condition of household budget, 6) interaction with family and friends, 7) practical support from family and friends, 8) reading habits, 9) having hobbies or not, 10) regularity of meal times, 11) eating breakfast/lunch/dinner or not, 12) amounts of vegetables/seaweeds/mushrooms eaten, 13) amounts of meat/soybean/egg products eaten, 14) amounts of seafood/shellfish eaten, 15) amount of iron intake, 16) condition of intake of other minerals, 17) frequency of eating out, 18) frequency of drinking alcoholic beverages, 19) consumption of alcoholic beverages, 20) frequency of caffeine intake during nighttime, 21) amount of caffeine intake during nighttime, 22) frequency of having a nightcap, 23) commuting route, 24) normal exercise level, 25) resignation history, 26) condition of use of electronic devices during nighttime, 27) change in body weight since the end of growth period, 28) illumination intensity from sunrise to wakeup time, 29) illumination intensity during daytime, 30) illumination intensity after sunset, 31) sleeping time on weekdays, 32) midpoint of sleeping hours on weekdays, 33) variation in sleeping hours on weekdays, 34) sleeping time on weekends/holidays, 35) midpoint of sleeping hours on weekends/holidays, 36) absolute value of difference in midpoint of sleeping hours between weekdays and weekends/holidays (social jet lag), 37) whether or not to go to bed even when not sleepy, and 38) question items that make up the existing medical questionnaire Pittsburgh Sleep Quality Index (PSQI), as well as the actual conditions of resigning/taking leaves of absence and those of productivity, and the coefficients of regression (raw coefficients of regression) corresponding to the respective question items as obtained from regression analysis of the response results.

The aforementioned Pittsburgh Sleep Quality Index (PSQI) is an existing, internationally-known medical questionnaire; specifically, it is a self-recording questionnaire consisting of 18 questions to evaluate the quality of sleep. The questionnaire has questions in seven categories including quality of sleep, sleeping time, sleeping latency, sleeping efficiency, difficulty sleeping, use of sleeping agents, and negative effects of drowsiness, etc., on daily life during daytime, and the responses are given 0 to 3 score points, respectively, and then added up to calculate the total score (0 to 54 points) for evaluation. The gauge for judgment is that the higher the score, the greater the sleep disturbance; under the present invention, however, only the PSQI question items are used without the specified score calculations. It should be noted that normally the PSQI provides a means for understanding the symptoms of sleep disorder, etc., and does not predict resignation, leave of absence, or decline in productivity like the present system does. The present system assigns unique coefficients of regression to the question items used by the PSQI, for use in probability calculations.

When the aforementioned results of the actual survey conducted by the inventors of the present invention were put through regression analysis, it was revealed that the response results to the aforementioned question items had significant impacts on resignation/leave of absence or decline in productivity, illuminating the feasibility of highly accurate probability calculations using resignation/leave of absence and decline in productivity as objective variables, and various question items to understand age/sex, sleep and lifestyle habits from different angles as explanatory variables. When regression models are utilized, the resignation/leave-of-absence probability and productivity decline risk can be expressed by the formulas below (wherein, p = resignation/leave-of-absence probability or productivity decline risk, bn = coefficient of regression for each lifestyle habit/sleep item, and Xn = response result on each lifestyle habit/sleep item):

    1. Using a linear regression model (Formula 1)

$$p = \text{Constant term} + b1\,X1 + b2X2 + b3X3 + b4X4 \ldots bnXn$$

2. Using a logit model (Formula 2)

If "Value of logit = Constant term + b1X1 + b2X2 + b3X3 + b4X4 ... bnXn," then $p = e^{logit}/1+e^{logit} = 1/1+e^{-logit}$

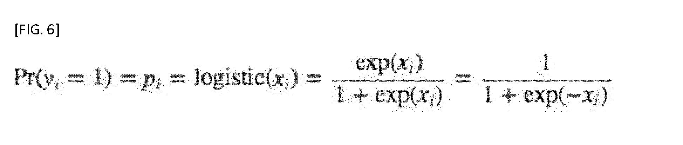

3. The regression formula is as shown in FIG. 6.

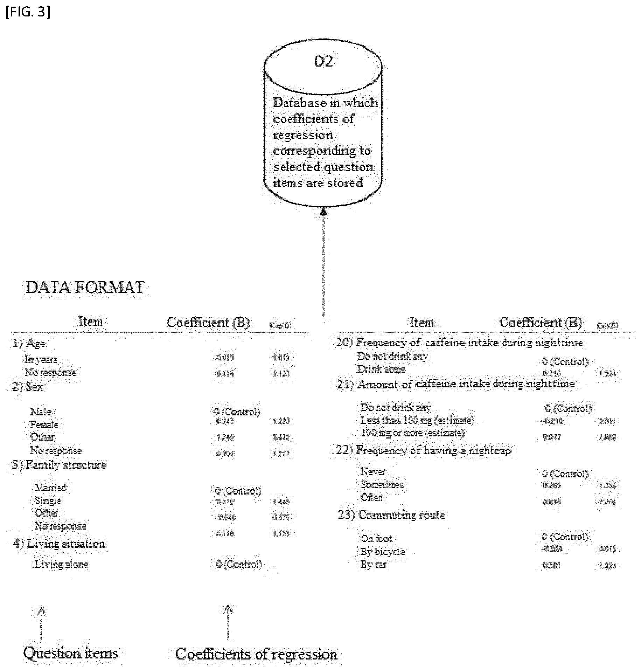

FIG. 3 shows a mechanism for saving the selected question items, and the computed coefficients of regression corresponding to the respective question items, in the database D2. In the example shown in FIG. 3, the present dataset, which is based on use of all of the aforementioned 38 question items as the question items, is stored in the database D1 as the present standard specification. For a given company to utilize this standard specification, it uses the organization terminal 2 to select all of the question items from 1) to 38) and prepare a questionnaire 5, and the response results will be used in probability calculations based on the aforementioned coefficients of regression (raw coefficients of regression).

While the aforementioned example covers the coefficients of regression (raw coefficients of regression) used for obtaining the resignation/leave-of-absence probability, different coefficients of regression for obtaining the productivity decline risk (raw coefficients of regression for obtaining the productivity decline risk) are utilized when computing the productivity decline risk.

Any of the aforementioned question items may be selected or left out arbitrarily according to the requirements of the organization (company, etc.) utilizing the present system. If a given organization excludes some question items from the aforementioned 38 question items, for example, only the selected question items are extracted from the data accumulated in the database D1 and put through multiple logistic regression analysis or multivariate multiple regression analysis to obtain new coefficients of regression reflecting the exclusion of the deleted question items (new coefficients of regression) (some of the question items are deleted and regression analysis is performed automatically using the remaining question items as explanatory variables and the resignation/leave-of-absence probability and productivity decline risk as objective variables). These data are stored in the database D2.

It should be noted that, among the question items, the 26 question items including 8) reading habits, 9) having hobbies or not, 10) regularity of meal times, 11) eating breakfast/lunch/dinner or not, 12) amounts of vegetables/seaweeds/mushrooms eaten, 13) amounts of meat/soybean/egg products eaten, 14) amounts of seafood/shellfish eaten, 15) amount of iron intake, 16) condition of intake of other minerals, 17) frequency of eating out, 18) frequency of drinking alcoholic beverages, 19) consumption of alcoholic beverages, 20) frequency of caffeine intake during nighttime, 21) amount of caffeine intake during nighttime, 22) frequency of having a nightcap, 24) normal exercise level, 26) condition of use of electronic devices during nighttime, 27) change in body weight since the end of growth period, 28) illumination intensity from sunrise to wakeup time, 29) illumination intensity during daytime, 30) illumination intensity after sunset, 31) sleeping time on weekdays, 33) variation in sleeping hours on weekdays, 34) sleeping time on weekends/holidays, 36) absolute value of difference in midpoint of sleeping hours between weekdays and weekends/holidays (social jet lag), and 37) whether or not to go to bed even when not sleepy, are items that have significant impacts on the resignation/leave-of-absence probability or productivity decline risk and thus the corresponding coefficients of regression are greater in value compared to the other question items. Additionally, because these 26 question items have particularly high correlation with the resignation/leave-of-absence probability and productivity decline risk and also represent items that can be improved with efforts of the respondent himself/herself, they may be designated, depending on the situation, as required question items that cannot be deleted on the organization side.

Furthermore, the resignation/leave-of-absence probability and productivity decline risk can be uniquely identified for each organization, industry, or type of job, for use with the question items. In this case, highly precise probability calculations can be performed so long as sufficient data is acquired for each organization, industry, and type of job, and put through regression analysis beforehand. Also, a company with thousands or tens of thousands of employees can analyze only the data pertaining to the company, to enable more precise computation of individual resignation/leave-of-absence probabilities and productivity decline risks in the company. In this case, results of surveys conducted independently by the company are aggregated in the database D1.

It should be noted that preparing a number of questionnaires 5 beforehand, each combining the balance of the 38 question items after excluding some arbitrary question items, and then calculating all of the corresponding coefficients of regression, is not realistic. Also, aggregation of data allows for building of more accurate calculation formulas, and various coefficients can change gradually to reflect changes in the social structure and lifestyle over time. This is why, when a company adopts the present system, all question items are stored in the database first, to enable all of them or only specific question items to be selected from the organization terminal for recalculations.

Also, besides the questionnaire 5 including all 38 question items, questionnaires excluding specific question items may be prepared beforehand as Standard Type A, Standard Type B, Standard Type C, etc. These may be questionnaires appropriate for different company sizes, industries/business categories, etc., for example.

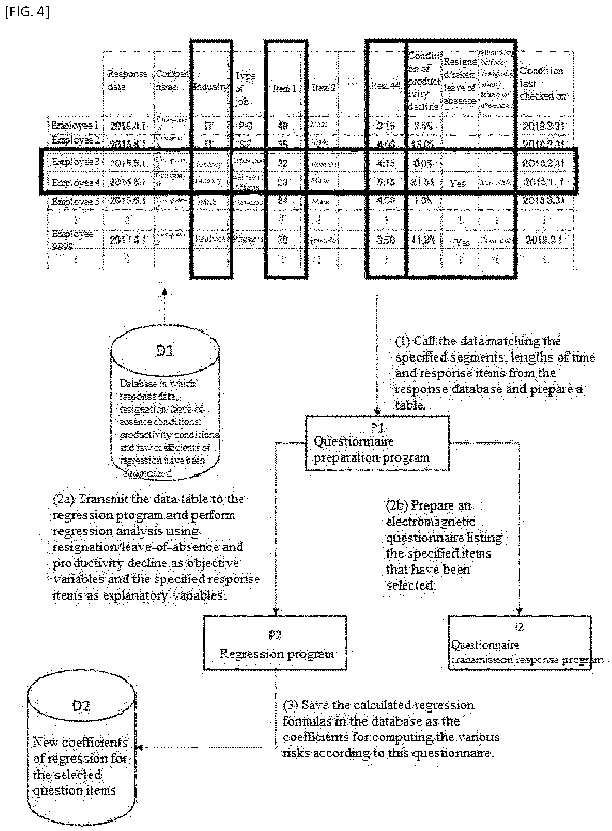

FIG. 4 is a figure showing a mechanism for preparing a desired questionnaire 5 and computing coefficients of regression from the organization terminal 2. When a company selects all 38 question items, a questionnaire 5 including 38 question items is prepared and the resignation/leave-of-absence probability or productivity decline risk is calculated based on the response results using the coefficients of regression (raw coefficients of regression) recorded beforehand in the database D1, as described above. It should be noted that the organization's administrator, as mentioned above, decides whether to use the questionnaire 5 to obtain the resignation/leave-of-absence probability or productivity decline risk, upon which the relevant information is transmitted to the administration server 1 from the organization terminal 2 and the computation program P3 calculates either the resignation/leave-of-absence probability or productivity decline risk, or both.

If, on the other hand, the organization's administrator selects/picks out from all 3 8 question items only those that are needed by the company, the questionnaire preparation program PI extracts only the selected/picked-out question items from the database D1 to prepare a questionnaire 5, while at the same time regression analysis is performed on the applicable question items using the regression program P2 to compute the coefficients of regression (new coefficients of regression) for the respective question items, and the results are stored in the database D2.

As described above, the questionnaire 5, as created through input operations from the organization terminal 2, is prepared by the questionnaire preparation program P1 and transmitted to the user terminal 3 from the questionnaire transmission/response program 12, after which the employee or prospective new recruit enters responses to the respective question items on the user terminal 3 and the entered responses are transmitted to the administration server 1 from the user terminal 3. It should be noted that, if question items are to be presented on a paper medium, the questionnaire 5 is output from a printer 4 by the paper document preparation program P5 and the employee or prospective new recruit enters responses on the paper medium, after which the results are collected, read by an OCR, etc., and transmitted to the administration server 1. Or, the response results may be manually entered as data.

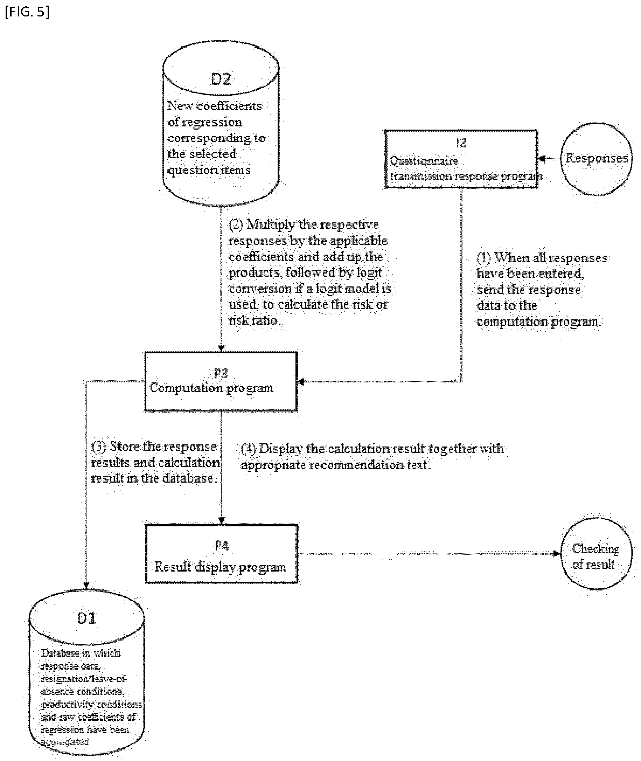

As shown in FIG. 5, the response results from the employee or prospective new recruit are fed to the computation program P3 for calculations based on Formula 1 or Formula 2 above. The calculation result, or specifically the resignation/leave-of-absence probability or productivity decline risk, is displayed by the result display program P4 on the organization terminal 2 as a numerical value. This result may be transmitted not only to the organization terminal 2, but also to the respondent himself/herself at the user terminal 3. Also, the result may be displayed not as a numerical value, but using a gradual scale (for example, it may be displayed as "A," "B" or "C," or as "No risk," "Some risk" or "High risk," etc.).

Receiving the aforementioned result, the company can understand, as a numerical value, whether or not the employee has a high probability of resigning/taking a leave of absence, or whether or not the employee presents a heightened risk of declining productivity, and use this information as an indicator for assigning the person to an appropriate job or making an appropriate change to his/her work shift.

Also, in the case of a prospective new recruit, the company can understand that once hired, the person may resign/take a leave of absence at a high probability, which allows this information to be utilized effectively as a hiring standard.

It should be noted that each question item may be recognized as one having greater impact on the resignation/leave-of-absence probability or productivity decline risk when the corresponding coefficient of regression is greater, in which case a specific message (text) urging improvement regarding the applicable item (improvement of lifestyle habit) may be sent to the organization terminal 2 and/or user terminal 3 according to its significance if the respondent is an employee belonging to the organization and has returned a positive response to the applicable item. In this case, master data storing various pre-constructed messages is built in the administration server 1 and, according to the response, an appropriate message is extracted and transmitted to the organization terminal 2 and/or user terminal 3.

Receiving the aforementioned message, the company (organization terminal 2) can provide the employee, who has been identified as problematic, with a specific guidance on his/her lifestyle habit through an industrial physician, health nurse or other personnel in charge of health and hygiene, in an efficient and pinpoint manner, to prevent the employee from resigning/taking a leave of absence or prevent his/her productivity from declining.

Desirably the question items for which pre-constructed messages are intended are 8) reading habits, 9) having hobbies or not, 10) regularity of meal times, 11) eating breakfast/lunch/dinner or not, 12) amounts of vegetables/seaweeds/mushrooms eaten, 13) amounts of meat/soybean/egg products eaten, 14) amounts of seafood/shellfish eaten, 15) amount of iron intake, 16) condition of intake of other minerals, 17) frequency of eating out, 18) frequency of drinking alcoholic beverages, 19) consumption of alcoholic beverages, 20) frequency of caffeine intake during nighttime, 21) amount of caffeine intake during nighttime, 22) frequency of having a nightcap, 24) normal exercise level, 26) condition of use of electronic devices during nighttime, 27) change in body weight since the end of growth period, 28) illumination intensity from sunrise to wakeup time, 29) illumination intensity during daytime, 30) illumination intensity after sunset, 31) sleeping time on weekdays, 33) variation in sleeping hours on weekdays, 34) sleeping time on weekends/holidays, 36) absolute value of difference in midpoint of sleeping hours between weekdays and weekends/holidays (social jet lag), and 37) whether or not to go to bed even when not sleepy, as mentioned above; however, there may be other question items.

The aforementioned 26 question items, while having significant impact on the resignation/leave-of-absence or productivity decline risk as mentioned above, also represent things that can be improved by the person through his/her own efforts and thus can lower his/her resignation/leave-of-absence probability or productivity decline risk through proactive improvement, where, in the case of sleeping hours, for example, a habit of waking up before the wakeup time at the end of the person's desirable sleeping hours or going to bed after a desirable bedtime increases his/her resignation/leave-of-absence probability or productivity decline risk, and therefore the aforementioned message should read "Morning shift is desired," "Night shift is desired" or "Shift starting X o'clock or later is desired," because when such message is sent, the company can implement a job reassignment or flex-time schedule change through Human Resources.

The data obtained from responses to the questionnaire 5 are stored sequentially in the database D1. Then, data on whether or not the respondent has resigned/taken a leave of absence or his/her productivity has declined at given points in time thereafter are added so that, once a specified period of time elapses, such data can be integrated with the data previously saved in the database D1 to obtain coefficients of regression of higher precision and perform more accurate probability calculations. Also, by accumulating data for each organization, industry, and type of job, statistically significant questionnaires of high individual reliability can be prepared.

**Description of the Symbols**

1 Administration server
2 Organization terminal
3 User terminal
4 Printer
5 Questionnaire
D1 Database in which responses to all question items, conditions of leave-of-absence/resignation, conditions of productivity, and coefficients of regression (raw coefficients of regression)) to all question items, have been accumulated
D2 Database in which question items picked out by the company (organization) utilizing the present system, and coefficients of regression (new coefficients of regression) assigned to the picked-out question items, are stored
P1 Questionnaire preparation program for preparing a questionnaire 5
P2 Regression program for performing regression analysis
P3 Computation program for calculating a probability according to the responses to the question items
P4 Result display program for displaying a result based on the responses to the question items
P5 Paper document preparation program for outputting the questionnaire and result to a paper medium
11 Administration console for performing data communication with the organization terminal
I2 Questionnaire transmission/response program for transmitting the questionnaire to the user terminal and also receiving responses

**Claims**

1. A personnel management assistance system that computes at least one of resignation/leave-of-absence probabilities of individuals belonging to an organization and/or prospective new recruits, and productivity decline risks of individuals belonging to the organization, thereby supporting the organization in implementing smooth personnel management, the personnel management assistance system **characterized in that**:

   it comprises an organization terminal used by the organization, and an administration server in which a processing program is recorded and also multiple databases are built;
   the organization terminal is connected online to the administration server;
   one of the databases records multiple pre-defined question items and raw coefficients of regression corresponding to the question items;
   an access is made from the organization terminal to the administration server to make a selection of all of the multiple question items recorded in the one of the databases or selection of arbitrary question items from among all of the question items, as well as to make a decision of whether to compute the resignation/leave-of-absence probability or productivity decline risk, from the administration server;
   the processing program, if the selected question items do not include all of the question items, performs a new regression analysis based on the selected question items, computes new coefficients of regression for the selected question items, and records the selected question items and computed new coefficients of regression in another of the databases; and
   the processing program computes, as numerical values, the resignation/leave-of-absence probabilities of the individuals belonging to the organization or the prospective new recruits and/or the productivity decline risks of the individuals belonging to the organization, based on response results from the individuals belonging to the organization or the prospective new recruits as well as the raw coefficients of regression or new coefficients of regression, and records computation results in the one of the databases, while also transmitting them to the organization terminal as electronic data and/or outputting them to a paper medium.

2. The personnel management assistance system according to claim 1, **characterized in that** the personnel management assistance system further includes a user terminal used by any of the individuals belonging to the organization and/or the prospective new recruits, and when the user terminal is connected to the administration server, a questionnaire recorded in the one of the databases is displayed by the processing program on the user terminal and the individual belonging to the organization and/or the prospective new recruit enters responses on the user terminal, after which response results are transmitted online to the administration server, while the computation result is transmitted to the user terminal from the administration server.

3. The personnel management assistance system according to claim 1 or 2, **characterized in that** the raw coefficients of regression are determined by a regression analysis based on a statistically significant number of preliminary survey results, by using the resignation/leave-of-absence probability and/or productivity declining risk each as an objective variable, and by using the question items as explanatory variables.

4. The personnel management assistance system according to any one of claims 1 to 3, **characterized in that** the raw coefficients of regression and new coefficients of regression differ depending on which of the resignation/leave-of-absence probability and productivity decline risk is obtained.

5. The personnel management assistance system according to any one of claims 1 to 4, **characterized in that** the computation result is displayed as a probability value or qualitative evaluation on a gradual scale, based on the numerical value.

6. The personnel management assistance system according to any one of claims 1 to 5, **characterized in that** the multiple pre-defined question items consist of age, sex, family structure, living situation, condition of household budget, interaction with family and friends, practical support from family and friends, reading habits, having hobbies or not, regularity of meal times, eating breakfast/lunch/dinner or not, amounts of vegetables/seaweeds/mushrooms eaten, amounts of meat/soybean/egg products eaten, amounts of seafood/shellfish eaten, amount of iron intake, condition of intake of other minerals, frequency of eating out, frequency of drinking alcoholic beverages, consumption of alcoholic beverages, frequency of caffeine intake during nighttime, amount of caffeine intake during nighttime, frequency of having a nightcap, commuting route, normal exercise level, resignation history, condition of use of electronic devices during nighttime, change in body weight since the end of growth period, illumination intensity from sunrise to wakeup time, illumination intensity during daytime, illumination intensity after sunset, sleeping time on weekdays, midpoint of sleeping hours on weekdays, variation in sleeping hours on weekdays, sleeping time on weekends/holidays, midpoint of sleeping hours on weekends/holidays, absolute value of difference in midpoint of sleeping hours between weekdays and weekends/holidays, whether or not to go to bed even when not sleepy, and Pittsburgh Sleep Quality Index question items.

7. The personnel management assistance system according to claim 2, **characterized in that** the multiple pre-defined question items include reading habits, having hobbies or not, regularity of meal times, eating breakfast/lunch/dinner or not, amounts of vegetables/seaweeds/mushrooms eaten, amounts of meat/soybean/egg products eaten, amounts of seafood/shellfish eaten, amount of iron intake, condition of intake of other minerals, frequency of eating out, frequency of drinking alcoholic beverages, consumption of alcoholic beverages, frequency of caffeine intake during nighttime, amount of caffeine intake during nighttime, frequency of having a nightcap, normal exercise level, condition of use of electronic devices during nighttime, change in body weight since the end of growth period, illumination intensity from sunrise to wakeup time, illumination intensity during daytime, illumination intensity after sunset, sleeping time on weekdays, variation in sleeping hours on weekdays, sleeping time on weekends/holidays, absolute value of difference in midpoint of sleeping hours between weekdays and weekends/holidays, and whether or not to go to bed even when not sleepy, and the processing program, depending on responses to the question items, extracts a prerecorded message for lowering the resignation/leave-of-absence probability and/or productivity decline risk, and transmits the message to the organization terminal and/or user terminal.

8. The personnel management assistance system according to claim 6 or 7, **characterized in that**, among the multiple pre-defined question items, reading habits, having hobbies or not, regularity of meal times, eating breakfast/lunch/dinner or not, amounts of vegetables/seaweeds/mushrooms eaten, amounts of meat/soybean/egg products eaten, amounts of seafood/shellfish eaten, amount of iron intake, condition of intake of other minerals, frequency of eating out, frequency of drinking alcoholic beverages, consumption of alcoholic beverages, frequency of caffeine intake during nighttime, amount of caffeine intake during nighttime, frequency of having a nightcap, normal exercise level, condition of use of electronic devices during nighttime, change in body weight since the end of growth period, illumination intensity from sunrise to wakeup time, illumination intensity during daytime, illumination intensity after sunset, sleeping time on weekdays, variation in sleeping hours on weekdays, sleeping time on weekends/holidays, absolute value of difference in midpoint of sleeping hours between weekdays and weekends/holidays, and whether or not to go to bed even when not sleepy, are required question items that cannot be excluded.

[FIG. 1]

1

**Database**

**D1**

Database in which response data, resignation/leave-of-absence conditions, productivity conditions and raw coefficients of regression have been aggregated

**D2**

Database in which new coefficients of regression corresponding to selected question items are stored

**Program**

**P1**
Questionnaire preparation program

**P2**
Regression program

**P3**
Computation program

**P4**
Result display program

**P5**
Paper document preparation program

**Interface**

**I1**
Administration console

**I2**
Questionnaire transmission/response program

Organization terminal

2

User terminal

3

Printer

4

Questionnaire

5

[FIG. 2]

**D1**

Database in which response data, resignation/leave-of-absence conditions, productivity conditions and raw coefficients of regression have been aggregated

## DATA FORMAT

| | Response date | Company name | Industry | Type of job | Item 1 | Item 2 | ... | Item 44 | Condition of productivity decline | Resigned/taken leave of absence? | How long before resigning/taking leave of absence? | Condition last checked on |
|---|---|---|---|---|---|---|---|---|---|---|---|---|
| Employee 1 | 2015.4.1 | Company A | IT | PG | 49 | Male | | 3:15 | 2.5% | | | 2018.3.31 |
| Employee 2 | 2015.4.1 | Company A | IT | SE | 35 | Male | | 4:00 | 15.0% | | | 2018.3.31 |
| Employee 3 | 2015.5.1 | Company B | Factory | Operator | 22 | Female | | 4:15 | 0.0% | | | 2018.3.31 |
| Employee 4 | 2015.5.1 | Company B | Factory | General Affairs | 23 | Male | | 5:15 | 21.5% | Yes | 8 months | 2016.1. 1 |
| Employee 5 | 2015.6.1 | Company C | Bank | General | 24 | Male | | 4:30 | 1.3% | | | 2018.3.31 |
| ⋮ | ⋮ | | | | ⋮ | ⋮ | | ⋮ | | ⋮ | ⋮ | ⋮ |
| Employee 9999 | 2017.4.1 | Company Z | Healthcare | Physician | 30 | Female | | 3:50 | 11.8% | Yes | 10 months | 2018.2.1 |
| ⋮ | ⋮ | | | | ⋮ | ⋮ | | ⋮ | | ⋮ | ⋮ | ⋮ |

[FIG. 3]

D2

Database in which coefficients of regression corresponding to selected question items are stored

DATA FORMAT

| Item | Coefficient (B) | Exp(B) |
|---|---|---|
| 1) Age | | |
| In years | 0.019 | 1.019 |
| No response | 0.116 | 1.123 |
| 2) Sex | | |
| Male | 0 (Control) | |
| Female | 0.247 | 1.280 |
| Other | 1.245 | 3.473 |
| No response | 0.205 | 1.227 |
| 3) Family structure | | |
| Married | 0 (Control) | |
| Single | 0.370 | 1.448 |
| Other | -0.548 | 0.578 |
| No response | 0.116 | 1.123 |
| 4) Living situation | | |
| Living alone | 0 (Control) | |

| Item | Coefficient (B) | Exp(B) |
|---|---|---|
| 20) Frequency of caffeine intake during nighttime | | |
| Do not drink any | 0 (Control) | |
| Drink some | 0.210 | 1.234 |
| 21) Amount of caffeine intake during nighttime | | |
| Do not drink any | 0 (Control) | |
| Less than 100 mg (estimate) | -0.210 | 0.811 |
| 100 mg or more (estimate) | 0.077 | 1.080 |
| 22) Frequency of having a nightcap | | |
| Never | 0 (Control) | |
| Sometimes | 0.289 | 1.335 |
| Often | 0.818 | 2.266 |
| 23) Commuting route | | |
| On foot | 0 (Control) | |
| By bicycle | -0.089 | 0.915 |
| By car | 0.201 | 1.223 |

Question items ← Coefficients of regression

[FIG. 4]

| | Response date | Company name | Industry | Type of job | Item 1 | Item 2 | ··· | Item 44 | Condition of productivity decline | Resigned/taken leave of absence? | How long before resigning/taking leave of absence? | Condition last checked on |
|---|---|---|---|---|---|---|---|---|---|---|---|---|
| Employee 1 | 2015.4.1 | Company A | IT | PG | 49 | Male | | 3:15 | 2.5% | | | 2018.3.31 |
| Employee 2 | 2015.4.1 | Company A | IT | SE | 35 | Male | | 4:00 | 15.0% | | | 2018.3.31 |
| Employee 3 | 2015.5.1 | Company B | Factory | Operator | 22 | Female | | 4:15 | 0.0% | | | 2018.3.31 |
| Employee 4 | 2015.5.1 | Company B | Factory | General Affairs | 23 | Male | | 5:15 | 21.5% | Yes | 8 months | 2016.1. 1 |
| Employee 5 | 2015.6.1 | Company C | Bank | General | 24 | Male | | 4:30 | 1.3% | | | 2018.3.31 |
| ⋮ | ⋮ | | | | | | | ⋮ | ⋮ | | | ⋮ |
| Employee 9999 | 2017.4.1 | Company Z | Healthcare | Physician | 30 | Female | | 3:50 | 11.8% | Yes | 10 months | 2018.2.1 |
| ⋮ | ⋮ | | | | | | | ⋮ | ⋮ | | | ⋮ |

**D1**

Database in which response data, resignation/leave-of-absence conditions, productivity conditions and raw coefficients of regression have been aggregated

**(1)** Call the data matching the specified segments, lengths of time and response items from the response database and prepare a table.

**P1**
Questionnaire preparation program

**(2a)** Transmit the data table to the regression program and perform regression analysis using resignation/leave-of-absence and productivity decline as objective variables and the specified response items as explanatory variables.

**(2b)** Prepare an electromagnetic questionnaire listing the specified items that have been selected.

**P2**
Regression program

**I2**
Questionnaire transmission/response program

**D2**

New coefficients of regression for the selected question items

**(3)** Save the calculated regression formulas in the database as the coefficients for computing the various risks according to this questionnaire.

[FIG. 5]

**D2**

New coefficients
of regression
corresponding to
the selected
question items

**I2**

Questionnaire
transmission/response program

Responses

(2) Multiply the respective
responses by the applicable
coefficients and add up the
products, followed by logit
conversion if a logit model is
used, to calculate the risk or
risk ratio.

(1) When all responses
have been entered,
send the response
data to the
computation program.

**P3**
Computation program

(3) Store the response
results and calculation
result in the database.

(4) Display the calculation result together with
appropriate recommendation text.

**P4**
Result display program

Checking
of result

**D1**

Database in which
response data,
resignation/leave-of-
absence conditions,
productivity conditions
and raw coefficients of
regression have been
aggregated

[FIG. 6]

$$\Pr(y_i = 1) = p_i = \text{logistic}(x_i) = \frac{\exp(x_i)}{1 + \exp(x_i)} = \frac{1}{1 + \exp(-x_i)}$$

## INTERNATIONAL SEARCH REPORT

| International application No. |
| --- |
| PCT/JP2019/023802 |

**A. CLASSIFICATION OF SUBJECT MATTER**
Int. Cl. G06Q10/10(2012.01)i, G06Q10/06(2012.01)i

According to International Patent Classification (IPC) or to both national classification and IPC

**B. FIELDS SEARCHED**

Minimum documentation searched (classification system followed by classification symbols)
Int. Cl. G06Q10/10, G06Q10/06

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2016-207165 A (BALANCE & UNIQUE INC.) 08 December 2016, entire text, all drawings (Family: none) | 1-8 |
| A | JP 2008-40670 A (CENTRAL RESEARCH INSTITUTE OF ELECTRIC POWER INDUSTRY) 21 February 2008, entire text, all drawings (Family: none) | 1-8 |
| A | JP 2006-139595 A (NOMURA RESEARCH INSTITUTE, LTD.) 01 June 2006, entire text, all drawings (Family: none) | 1-8 |

☒ Further documents are listed in the continuation of Box C.　　☐ See patent family annex.

| | | |
| --- | --- | --- |
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
| --- | --- |
| 03.07.2019 | 16.07.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

EP 3 816 901 A1

| | | International application No. |
|---|---|---|
| **INTERNATIONAL SEARCH REPORT** | | PCT/JP2019/023802 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2007/136108 A1 (MATSUSHITA ELECTRIC INDUSTRIAL CO., LTD.) 29 November 2007, entire text, all drawings & US 2010/0234691 A1, entire text, all drawings & GB 2453062 A & CA 2653420 A1 | 1-8 |

Form PCT/ISA/210 (continuation of second sheet) (January 2015)

17

**EP 3 816 901 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009271601 A
- JP 2016151979 A